# EUROPÄISCHE PATENTSCHRIFT

(11) **EP 2 542 456 B1**
(45) Veröffentlichungstag und Bekanntmachung des Hinweises auf die Patenterteilung: **09.09.2015**
(21) Anmeldenummer: 11700637.9
(22) Anmeldetag: 10.01.2011
(51) Int. Cl.: B60T 8/176, B60T 8/1761, B60T 8/32, B60T 8/44, B60T 8/50, B60T 8/1755

(54) **VERFAHREN ZUM DURCHFÜHREN EINES NOTBREMSVORGANGS**
METHOD FOR CARRYING OUT AN EMERGENCY BRAKING OPERATION
PROCÉDÉ DE RÉALISATION D'UN FREINAGE D'URGENCE

(30) Priorität: 04.03.2010 DE 102010002574
(43) Veröffentlichungstag der Anmeldung: 09.01.2013
(73) Patentinhaber: Robert Bosch GmbH, 70442 Stuttgart (DE)
(72) Erfinder: EPPLE, Stefan, 71696 Moeglingen (DE); WAGNER, Jochen, 71696 Moeglingen (DE)
(86) Internationale Anmeldenummer: PCT/EP2011/050218
(87) Internationale Veröffentlichungsnummer: WO 2011/107301

(56) Entgegenhaltungen:
- DE-A1- 19 936 436
- DE-A1-102005 021 497
- DE-A1-102006 061 418
- DE-A1-102008 008 568
- DE-A1-102008 036 607
- DE-A1-102009 033 122
- US-A1- 2002 130 550

## Beschreibung

Die Erfindung bezieht sich auf ein Verfahren zum Durchführen eines Notbremsvorgangs mittels eines Bremsassistent-Systems in einem Fahrzeug nach dem Oberbegriff des Anspruches 1.

### Stand der Technik

Aus der DE 199 36 436 A1 ist es bekannt, eine Notbremssituation in einem Fahrzeug anhand der Veränderung einer Drehzahlbeschleunigung wenigstens eines Rades zu erkennen und über einen in dem Fahrzeugbremssystem implementierten Bremsassistenten eine zusätzliche Bremskraft zu erzeugen, welche der vom Fahrer erzeugten Bremskraft überlagert wird und diese verstärkt. Für die Aktivierung der Bremskraftverstärkung werden verschiedene Schwellenwerte für die Änderung der Winkelgeschwindigkeiten der Fahrzeugräder festgelegt, welche aus gemessenen Raddrehzahlen bestimmt wird. Als weiteres Kriterium wird die Betätigungsgeschwindigkeit des Bremspedals für das Auslösen der Bremskraftverstärkung herangezogen. Außer der Kombination verschiedener Kriterien wird eine verbesserte Plausibilisierung erreicht, um sicherzustellen, dass die Bremskraftverstärkung auch tatsächlich nur in Notbremssituationen erzeugt wird.

Ebenso wie für das Auslösen der Bremskraftverstärkung müssen auch Kriterien für die Beendigung der Bremskraftverstärkung definiert werden.

Die DE 10 2008 036 607 A1 offenbart, in Gefahrensituationen eine hydraulische Bremsdruckverstärkung in einem Kraftfahrzeug-Bremssystem durchzuführen, wobei sich die Bremsdruckverstärkung aus einem ersten, fahrergesteuerten Druckanteil und einem zweiten, von einer Druckerzeugungseinrichtung erzeugten Druckanteil zusammensetzt. Die Abschaltung des über die Druckerzeugungseinrichtung zur Verfügung gestellten, zweiten Druckanteils erfolgt in mehreren Stufen, wobei der Beginn ersten Stufe der Reduzierung des zweiten Druckanteils sich aus einem Anteil des ersten Druckanteils an der Verzögerung des Fahrzeugs bestimmt. Der Beginn zweiten Stufe der Reduzierung des zweiten Druckanteils ist dadurch definiert, dass der zweite Druckanteil kleiner als eine vorbestimmte Druckschwelle wird. Die Ermittlung der Zeitpunkte der Reduzierung setzt einen Drucksensor voraus.

Die DE 10 2005 021 497 A1 zeigt einen Bremsassistenten, der für Notbremsvorgänge eingesetzt wird, bei denen über den Bremsassistenten ein zusätzlicher Bremsdruck bereitgestellt wird. Verändert der Fahrer die gewünschte Verzögerung durch Nachlassen des Bremspedals und unterschreitet die Fahrzeugverzögerung einen unteren Schwellenwert, wird vom Notbremsbetrieb in den Normalbremsbetrieb umgeschaltet.

### Offenbarung der Erfindung

Der Erfindung liegt die Aufgabe zugrunde, die Bremskraftverstärkung in einem Fahrzeugbremssystem, welches mit einem Bremsassistenten ausgestattet ist, zum Abschließen eines Notbremsvorgangs in einer komfortablen und sicheren Weise zu beenden.

Diese Aufgabe wird erfindungsgemäß mit den Merkmalen der unabhängigen Ansprüche gelöst. Die Unteransprüche geben zweckmäßige Weiterbildungen an.

Das Verfahren zum Durchführen eines Notbremsvorgangs setzt ein Fahrzeugbremssystem mit einem Bremsassistent-System voraus, über das in Notsituationen eine Bremskraftverstärkung durchgeführt werden kann, bei der zusätzlich zu der vom Fahrer erzeugten Bremskraft in automatischer Weise eine Zusatzbremskraft generiert wird. Zur Auslösung der Bremskraftverstärkung werden Fahrzeug-Zustands- bzw. Fahrzeugsystemgrößen ausgewertet, welche insbesondere auf sensorisch erfassten Daten beruhen, beispielsweise Informationen aus Raddrehzahlsensoren. Sofern die für die Auslösung der Bremskraftverstärkung definierten Kriterien bzw. Schwellenwerte erfüllt sind, erfolgt die Bremskraftverstärkung, die so lange andauert, bis die für die Beendigung der Bremskraftverstärkung formulierten Bedingungen eintreten.

Die Abschaltung der Bremskraftverstärkung hängt von dem Verstreichen einer Aktivierungszeitdauer ab, in der das Bremsassistent-System zugeschaltet gewesen ist. Die Bremskraftverstärkung wird entweder schlagartig oder gemäß einer vorgegebenen Funktion, beispielsweise rampenförmig zurückgeführt.

Die Aktivierungszeitdauer wird als Funktion der Fahrzeuggeschwindigkeit ermittelt, wobei vorzugsweise mit der Fahrzeuggeschwindigkeit auch die Aktivierungszeitdauer zunimmt. Allgemein können eine oder mehrere Zustandsgrößen in die Berechnung der Aktivierungszeitdauer einfließen.

Gemäß eines Aspektes der Erfindung wird die Abschaltung der Bremskraftverstärkung in mindestens zwei Stufen durchgeführt, wobei in einer ersten Stufe mit dem Erreichen eines ersten Zustandsgrößen-Grenzwerts die Bremskraftverstärkung zunächst auf einen kleineren Wert reduziert wird und in einer weiteren Stufe mit dem Erreichen eines weiteren Zustandsgrößen-Grenzwerts die Bremskraftverstärkung bis auf Null herabgesetzt wird. Es handelt sich um eine Reduzierung der Bremskraftverstärkung in mindestens zwei Stufen, wobei gegebenenfalls auch eine größere Anzahl an Stufen in Betracht kommt, beispielsweise drei Stufen oder vier Stufen. Die stufenweise Zurückführung der Bremskraftverstärkung hat den Vorteil, dass über die Vorgabe der jeweils zugeordneten Grenzwerte bzw. Schwellenwerte eine bessere Anpassung an die aktuelle Fahrsituation möglich ist. So kann beispielsweise die Bremskraftverstärkung individuell auf jeder Stufe je nach aktueller Situation für eine unterschiedlich lange Zeitdauer gehalten werden, die sich als Funktion weiterer Zustandsgrößen oder sonstiger aktueller Fahrzeugkenngrößen bemisst.

Gemäß einer zweckmäßigen Weiterbildung ist vorgesehen, dass die Zustandsgröße, welche für die Beendigung der Bremskraftverstärkung ausgewertet wird, die Fahrzeugverzögerung oder eine damit korrelierende Größe, beispielsweise die Änderung der Radwinkelgeschwindigkeit an einem oder mehreren Fahrzeugrädern ist. Für die verschiedenen Stufen bei der Reduzierung der Bremskraftverstärkung werden zweckmäßigerweise gleiche Zustandsgrößen betrachtet, wobei grundsätzlich auch verschiedenartige Zustandsgrößen in den einzelnen Stufen mit jeweils zugeordneten Grenzwerten betrachtet werden können.

Nachdem die letzte Stufe im Abschaltvorgang der Bremskraftverstärkung erreicht ist, wird die Bremskraftverstärkung entweder sofort abgebaut, so dass innerhalb kürzester Zeit ausschließlich die vom Fahrer erzeugte Bremskraft wirksam ist, oder gemäß einer vorgegebenen Funktion, insbesondere rampenförmig bis auf Null reduziert. Allgemein kann der Abbau der Bremskraft von Stufe zu Stufe sowohl schlagartig als auch rampenförmig oder gemäß einer sonstigen vorgegebenen Funktion erfolgen, wobei für den Wechsel zwischen verschiedenen Stufen bzw. von der letzten Stufe aus Null sowohl gleichartige Reduzierungsfunktionen als auch unterschiedliche Reduzierungsfunktionen in Betracht kommen.

Während der Bremskraftverstärkungsphase, also noch vor dem Erreichen der Abschaltungsphase, wird vorteilhafterweise zumindest abschnittsweise eine konstante Verzögerung über die Bremskraftverstärkung erzeugt, die über den Bremsassistenten aufgebaut wird. Möglich ist beispielsweise aber auch eine treppenförmige Funktion, insbesondere dergestalt, dass mit dem Einsetzen der Bremskraftverstärkung zunächst eine buckelförmige Überhöhung durchgeführt wird, die anschließend auf einem gegenüber dem Maximalwert der Bremskraftverstärkung reduzierten Niveau weitergeführt wird, wobei dieses Niveau bevorzugt zumindest abschnittsweise konstant ist.

Das Erkennen einer Notsituation, welche zum Auslösen der Bremskraftverstärkung führt, erfolgt vorzugsweise ohne Zuhilfenahme eines Drucksensors zur Ermittlung des aktuellen Bremsdrucks. Grundsätzlich genügt es, eine Notsituation über die Auswertung der gemessenen Raddrehzahlen zu detektieren, wobei gegebenenfalls zusätzlich weitere Einflussfaktoren berücksichtigt werden können, beispielsweise die Fahrbahnreibung, die aktuelle Steigung, der aktuelle Beladungszustand, Fahrwerkseinstellungen bzw. der aktuelle Bremsenzustand. Gleichwohl kann es zweckmäßig sein, auch den aktuellen Bremsdruck zum Detektieren der Notsituation zu berücksichtigen.

Das erfindungsgemäße Verfahren läuft in einem Regel- bzw. Steuergerät im Fahrzeug ab, welches entweder Bestandteil des Bremssystems ist oder mit dem Bremssystem kommuniziert.

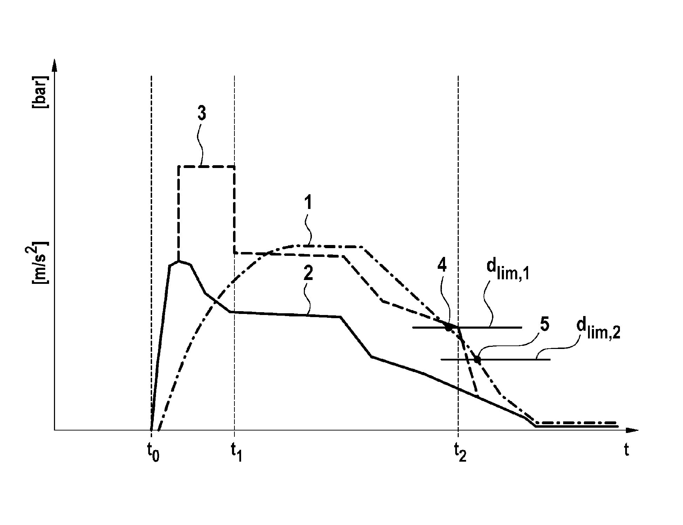

Weitere Vorteile und zweckmäßige Ausführungen sind den weiteren Ansprüchen, der Figurenbeschreibung und der Zeichnung zu entnehmen, in der ein Diagramm mit verschiedenen Zustandsgrößen während der Aktivierung und Abschaltung eines Bremsassistenten dargestellt ist.

In dem Schaubild ist auf der Abszisse die Zeit mit eingetragenen Zeitpunkten t₀, t₁ und t₂ dargestellt, die Ordinate repräsentiert die mit strichpunktierter Linie dargestellte Fahrzeugverzögerung 1 in m/s² bzw. den Fahrerbremsdruck 2 sowie die Bremskraftverstärkung 3, jeweils in bar bzw. einer vergleichbaren Einheit, wobei der Fahrerbremsdruck 2 mit durchgezogener Linie und die Bremskraftverstärkung 3 mit strichlierter Linie eingetragen ist. Die dargestellten Kurven in dem Schaubild zeigen die Aktivierung, die Durchführung sowie die Abschaltung eines Bremsassistenten in einem Fahrzeugbremssystem.

Zum Zeitpunkt t₀ erfolgt die Aktivierung der Fahrzeugbremse, indem der Fahrer das Bremspedal betätigt, was anhand eines starken Anstieges des Fahrerbremsdrucks 2 zu erkennen ist. Die Höhe des Anstiegs des Fahrerbremsdrucks ist beispielsweise ein Indiz für einen Notbremsvorgang, bei dem zusätzlich zum Fahrerbremsdruck 2 eine Bremskraftverstärkung 3 durch Zuschalten eines Bremsassistenten erzeugt wird. Die Notsituation wird nicht zwingenderweise anhand des Bremsdrucks detektiert; vielmehr kann die Notbremssituation auch über eine Auswertung sonstiger, sensorisch ermittelter Informationen erfasst werden, beispielsweise auf der Grundlage gemessener Raddrehzahlen.

Im gezeigten Ausführungsbeispiel wird im Bereich des Fahrerbremsdruckmaximums zwischen den Zeitpunkten t₀ und t₁ der Bremsassistent zugeschaltet und die Bremskraftverstärkung 3 erzeugt, welche zunächst einen treppenförmig absteigenden Verlauf aufweist. Mit dem Zuschalten der Bremskraftverstärkung 3 steigt diese zunächst auf ein Maximum an, welches bis zum Erreichen des Zeitpunktes t₁ beibehalten wird. Ab dem Zeitpunkt t₁ sinkt die Bremskraftverstärkung 3 auf einen niedrigeren Wert ab, welcher zumindest annähernd konstant ist und ein Niveau aufweist, welches geringfügig oberhalb des Maximums des Fahrerbremsdrucks 2 liegt. Die Bremskraftverstärkung 3 stellt hierbei einen Offset dar, der zum Fahrerbremsdruck 2 hinzuaddiert wird, so dass die Kurve der Bremskraftverstärkung 3 bezogen auf die Abszisse den absoluten Bremsdruckwert repräsentiert, der sich aus dem Bremsdruck des Fahrers und der Bremskraftverstärkung zusammensetzt.

Aufgrund des starken Anstiegs des Bremsdrucks, welcher durch Überlagerung des Fahrerbremsdrucks 2 mit der Bremskraftverstärkung 3 gebildet ist, steigt auch der Verlauf der Fahrzeugverzögerung 1 stark an, wobei die Fahrzeugverzögerung 1 zwischen den Zeitpunkten t₁ und t₂ ein Maximum erreicht, dessen Niveau abschnittsweise beibehalten wird, bis die Fahrzeugverzögerung annähernd linear bis auf Null bzw. annähernd Null absinkt. Das Absinken der Fahrzeugverzögerung 1 verläuft annähernd parallel zum Absinken des Fahrerbremsdrucks 2 sowie der Bremskraftverstärkung 3.

Etwa zum Zeitpunkt t₂ beginnt der Abschaltvorgang der Bremskraftverstärkung. Das Abschalten der Bremskraftverstärkung 3 kann anhand unterschiedlicher Kriterien eingeleitet werden. Möglich ist es, Schwellen- bzw. Grenzwerte dₗᵢₘ,₁ und d_{lim,2} für die Fahrzeugverzögerung vorzugeben, wobei der Abschaltvorgang der Bremskraftverstärkung eingeleitet wird, sobald der größere Grenzwert d_{lim,1} von der tatsächlichen Fahrzeugverzögerung 1 erreicht wird. Mit dem Erreichen dieses Grenzwertes wird die Bremskraftverstärkung reduziert, vorzugsweise rampenförmig. Sinkt die Fahrzeugverzögerung 1 bis zu dem niedrigeren zweiten Grenzwert d_{lim,2} ab, erfolgt eine weitere Reduzierung der Bremskraftverstärkung bis auf Null. Dieses weitere Absinken kann entweder mit dem gleichen Gradienten oder mit einem unterschiedlichen Gradienten oder gegebenenfalls auch mit einer völlig anderen Funktion durchgeführt werden. Die Grenzwerte d_{lim,1} und d_{lim,2} für die Fahrzeugverzögerung werden entweder als feste Schwellenwerte vorgegeben oder situationsabhängig aus weiteren Zustandsgrößen bzw. Kennwerten des Fahrzeugs ermittelt.

Grundsätzlich möglich ist es auch, dass die Grenzwerte d_{lim,1} und d_{lim,2} zusammenfallen und somit den gleichen Wert einnehmen.

Des Weiteren ist es auch möglich, den Abschaltvorgang mit Erreichen einer Zeitschwelle einzuleiten, beispielsweise mit Erreichen des Zeitpunktes t₂, wobei sich dieser Abschaltzeitpunkt t₂ aus einer Aktivierungszeitdauer t_{act} bemisst, deren Beginn auf die Aktivierung der Bremskraftverstärkung fällt. Sobald ab diesem Zeitpunkt die Aktivierungszeitdauer abgelaufen ist, was zum Zeitpunkt t₂ der Fall ist, beginnt der Abschaltvorgang der Bremskraftverstärkung, welche daraufhin systematisch bis auf Null zurückgeführt wird.

Gemäß einer vorteilhaften Ausführung ist eine Kombination von verschiedenen Kriterien für die Abschaltung der Bremskraftverstärkung 3 vorgesehen. So ist es insbesondere möglich, die verschiedenen Schwellen- bzw. Grenzwerte bezüglich einer Zustandsgröße des Fahrzeugs, bei deren Erreichen der Abschaltvorgang eingeleitet wird, mit einer Zeitschwelle zu kombinieren. Im Ausführungsbeispiel bedeutet dies, dass der Abschaltvorgang eingeleitet wird, sobald eines der verschiedenen Kriterien für den Beginn des Abschaltens erfüllt ist, beispielsweise die Fahrzeugverzögerung unter den Grenzwert d_{lim,1} fällt, sofern nicht zuerst die Aktivierungszeitdauer t_{act} überschritten wird.

## Patentansprüche

1. Verfahren zum Durchführen eines Notbremsvorgangs mittels eines Bremsassistent-Systems in einem Fahrzeug, bei dem eine vom Fahrer vorgegebene Bremsbetätigung durch das Bremsassistent-System verstärkt wird, **dadurch gekennzeichnet, dass** die Abschaltung der Bremskraftverstärkung durchgeführt wird, nachdem das Bremsassistent-System für eine definierte Aktivierungszeitdauer (t_{act}) zugeschaltet gewesen ist, wobei die Aktivierungszeitdauer (t_{act}) als Funktion der Fahrzeuggeschwindigkeit ermittelt wird.

2. Verfahren nach Anspruch 1, **dadurch gekennzeichnet, dass** die Aktivierungszeitdauer (t_{act}) als fester Schwellenwert vorgegeben wird.

3. Verfahren nach Anspruch 1 oder 2, **dadurch gekennzeichnet, dass** die Abschaltung der Bremskraftverstärkung in mindestens zwei Stufen durchgeführt wird, derart, dass in der ersten Stufe mit dem Erreichen eines ersten Zustandsgrößen-Grenzwerts (d_{lim,1}) die Bremskraftverstärkung reduziert wird und in einer weiteren Stufe mit dem Erreichen eines weiteren Zustandsgrößen-Grenzwerts (d_{lim,2}) die Bremskraftverstärkung bis auf Null reduziert wird.

4. Verfahren nach Anspruch 3, **dadurch gekennzeichnet, dass** die betrachtete Zustandsgröße die Fahrzeugverzögerung oder eine damit korrelierende Größe ist.

5. Verfahren nach Anspruch 3 oder 4, **dadurch gekennzeichnet, dass** nach dem Erreichen des weiteren Zustandsgrößen-Grenzwerts (d_{lim,2}) die Bremskraftverstärkung sofort abgebaut wird.

6. Verfahren nach einem der Ansprüche 1 bis 5, **dadurch gekennzeichnet, dass** der Abbau der Bremskraftverstärkung gemäß einer vorgegebenen Funktion durchgeführt wird, beispielsweise rampenförmig.

7. Verfahren nach einem der Ansprüche 1 bis 6, **dadurch gekennzeichnet, dass** vor dem Abschalten der Bremskraftverstärkung über das Bremsassistent-System eine konstante, zusätzliche Verzögerung erzeugt wird.

8. Verfahren nach einem der Ansprüche 1 bis 7, **dadurch gekennzeichnet, dass** das Erkennen einer das Bremsassistent-System aktivierenden Notsituation ohne Drucksensor erfolgt.

9. Regel- bzw. Steuergerät zur Durchführung des Verfahrens nach einem der Ansprüche 1 bis 8.

## Claims

1. Method for carrying out an emergency braking operation by means of a braking assistant system in a vehicle, in which a braking activation which is predefined by the driver is boosted by the braking assistant system, **characterized in that** the brake boosting is switched off after the braking assistant system has been switched on for a defined activation time period (t_{act}), wherein the activation time period (tact) is determined as a function of the vehicle speed.

2. Method according to Claim 1, **characterized in that** the activation time period (tact) is predefined as a fixed threshold value.

3. Method according to Claim 1 or 2, **characterized in that** the brake boosting is switched off in at least two stages in such a way that in the first stage the brake boosting is reduced when a first status variable limiting value (d_{lim,1}) is reached, and in a further stage the brake boosting is reduced to zero when a further status variable limiting value (d_{im,2}) is reached.

4. Method according to Claim 3, **characterized in that** the observed status variable is the vehicle deceleration or a variable which correlates therewith.

5. Method according to Claim 3 or 4, **characterized in that** the brake boosting is reduced immediately after the further status variable limiting value (d_{lim,2}) is reached.

6. Method according to one of Claims 1 to 5, **characterized in that** the reduction in the brake boosting is carried out according to a predefined function, for example in a ramp shape.

7. Method according to one of Claims 1 to 6, **characterized in that** before the brake boosting is switched off, a constant additional deceleration is generated by means of the braking assistant system.

8. Method according to one of Claims 1 to 7, **characterized in that** an emergency situation which activates the braking assistant system is detected without a pressure sensor.

9. Closed-loop or open-loop control unit for carrying out the method according to one of Claims 1 to 8.

## Revendications

1. Procédé de réalisation d'un processus de freinage d'urgence au moyen d'un système d'assistance au freinage dans un véhicule, dans lequel un actionnement de freinage prescrit par le conducteur est amplifié par le système d'assistance au freinage, **caractérisé en ce que** la déconnexion de l'amplification de force de freinage est effectuée après que le système d'assistance au freinage a été mis en service pendant une durée d'activation définie (t_{act}), dans lequel la durée d'activation (t_{act}) est déterminée en fonction de la vitesse du véhicule.

2. Procédé selon la revendication 1, **caractérisé en ce que** la durée d'activation (t_{act}) est prescrite comme une valeur de seuil fixe.

3. Procédé selon la revendication 1 ou 2, **caractérisé en ce que** la déconnexion de l'amplification de force de freinage est effectuée en au moins deux stades, de telle sorte que dans le premier stade l'amplification de force de freinage est réduite lorsqu'une première valeur limite de grandeur d'état (d_{lim,1}) est atteinte et que dans un autre stade l'amplification de force de freinage est réduite à zéro lorsqu'une autre valeur limite de grandeur d'état (d_{lim,2}) est atteinte.

4. Procédé selon la revendication 3, **caractérisé en ce que** la grandeur d'état considérée est la décélération du véhicule ou une grandeur corrélant avec celle-ci.

5. Procédé selon la revendication 3 ou 4, **caractérisé en ce qu'**après que l'autre valeur limite de grandeur d'état (d_{lim,2}) a été atteinte, l'amplification de force de freinage est aussitôt abaissée.

6. Procédé selon une des revendications 1 à 5, **caractérisé en ce que** l'abaissement de l'amplification de force de freinage est effectué selon une fonction prescrite, par exemple en forme de rampe.

7. Procédé selon une des revendications 1 à 6, **caractérisé en ce qu'**avant la déconnexion de l'amplification de force de freinage par l'intermédiaire du système d'assistance au freinage, une décélération constante supplémentaire est produite.

8. Procédé selon une des revendications 1 à 7, **caractérisé en ce que** la reconnaissance d'une situation d'urgence activant le système d'assistance au freinage a lieu sans capteur de pression.

9. Appareil de régulation respectivement de commande pour mettre en oeuvre le procédé selon une des revendications 1 à 8.
